# EUROPÄISCHE PATENTSCHRIFT

(11) **EP 3 341 214 B1**
(45) Veröffentlichungstag und Bekanntmachung des Hinweises auf die Patenterteilung: **12.06.2019**
(21) Anmeldenummer: 16757230.4
(22) Anmeldetag: 25.08.2016
(51) Int. Cl.: B42D 1/00, B42D 3/10, B42D 3/12, B42D 25/22, G06K 19/073, G06K 19/07

(54) **BUCHARTIGES DOKUMENT, INSBESONDERE IDENTIFIKATIONSDOKUMENT MIT EINEM TRANSPONDERMODUL UND VERFAHREN ZUM SICHERN VON DATEN IN EINEM BUCHARTIGEN DOKUMENT**
BOOK-LIKE DOCUMENT, IN PARTICULAR AN IDENTIFICATION DOCUMENT, WITH A TRANSPONDER MODULE AND METHOD FOR SECURING DATA IN A BOOK-LIKE DOCUMENT
DOCUMENT DE TYPE LIVRE, EN PARTICULIER UN DOCUMENT D'IDENTIFICATION, AVEC UN MODULE TRANSPONDEUR ET PROCÉDÉ POUR SÉCURISER DES DONNÉES DANS UN DOCUMENT DE TYPE LIVRE

(30) Priorität: 27.08.2015 DE 102015114228
(43) Veröffentlichungstag der Anmeldung: 04.07.2018
(73) Patentinhaber: Bundesdruckerei GmbH, 10969 Berlin (DE)
(72) Erfinder: TSCHAKERT, Daniel, 15526 Bad Saarow (DE); SEIJO BOLLIN, Hans-Peter, 10245 Berlin (DE)
(74) Vertreter: Mammel und Maser
(86) Internationale Anmeldenummer: PCT/EP2016/070072
(87) Internationale Veröffentlichungsnummer: WO 2017/032827

(56) Entgegenhaltungen:
- WO-A2-2008/075232
- DE-A1-102006 015 782
- DE-A1-102013 221 768
- US-B1- 8 903 303

## Beschreibung

Die Erfindung betrifft ein buchartiges Dokument, insbesondere Identifikationsdokument, mit einem Bucheinband, welcher eine Buchdeckenvorderseite und eine Buchdeckenrückseite umfasst, mit einer oder mehreren Datenseiten und/oder mit einer Personalisierdatenseite und mit einer in dem Bucheinband oder der Personalisierdatenseite angeordneten Transpondermodul, welches eine Antenne und einen IC-Chip umfasst. Des Weiteren betrifft die Erfindung ein Verfahren zum Sichern von Daten in einem buchartigen Dokument.

Aus der DE 10 2013 221 768 A1 ist ein buchartiges Dokument bekannt, welches einen Bucheinband mit einer Buchdeckenvorderseite und einer Buchdeckenrückseite umfasst. Dazwischen liegend sind eine oder mehrere Datenseiten und eine Personalisierdatenseite vorgesehen. Im Bucheinband ist ein IC-Chip mit einer Antenne vorgesehen. Die Personalisierdatenseite nimmt einen Permanentmagneten auf, der als Steuerelement für einen Magnetsensor dient, der mit einem Schalter verbunden ist. Dieser Schalter unterbricht oder schließt die Antennenwindung des IC-Chips. Solange das Dokument geschlossen ist, befindet sich der Permanentmagnet über dem Sensor, so dass der Sensor den Schalter in einen ersten Schaltzustand setzt, in dem dieser geschlossen ist. In diesem Schaltzustand ist der Antennenschwingkreis unterbrochen. Ein Auslesen der Daten ist nicht gegeben.

Aus der GB 774 664 A ist ein Buch mit einem Bucheinband bekannt, der eine Buchdeckenvorderseite und eine Buchdeckenrückseite umfasst, zwischen denen eine Vielzahl von Seiten angeordnet ist. Am jeweiligen äußeren klappbaren Ende der Buchdeckenvorderseite und der Buchdeckenrückseite ist ein Magnetelement vorgesehen, welches die Buchdeckenvorderseite und die Buchdeckenrückseite in einer geschlossenen Anordnung hält. Nach Überwindung einer Magnethaltekraft kann dieses Buch aufgeklappt werden.

Aus der DE 10 2008 023 411 A1 ist ein solches buchartiges Dokument bekannt. Bei diesem buchartigen Dokument ist eine Personalisierdatenseite mit einem Transpondermodul vorgesehen, welche beispielsweise in einem Bucheinband zusammen mit mehreren Datenseiten eingebracht ist. Beim Auslesen der Daten von der Personalisierdatenseite wird das buchartige Dokument aufgeklappt. Anschließend weisen solche buchartigen Dokumente oftmals ein ungenügendes Schließverhalten auf, so dass es aufgrund eines nicht vollständigen Schließens der Buchdeckenvorderseite zur Buchdeckenrückseite zu einem unerwünschten visuellen Auslesen von Daten des buchartigen Dokumentes kommen kann.

Aus der DE 60 2004 005 241 T2 ist des Weiteren ein buchartiges Dokument mit einem Transpondermodul bekannt, bei welchem zum Schutz vor einem unerwünschten elektronischen Ansprechen oder elektronischen Auslesen von Daten des Transpondermoduls im buchartigen Dokument eine Abschirmung vorgesehen ist. Diese Abschirmung umfasst eine passive Abdeckung, wie beispielsweise eine Schicht oder Folie in einer Buchdeckeneinlage, die einer Antenne des Transpondermoduls zumindest bereichsweise zugeordnet ist. Durch diese als metallische Schicht aufgebrachte Abschirmung soll verhindert werden, dass in einem geschlossenen Zustand des buchartigen Dokumentes ein unerwünschtes Auslesen der Daten aus dem Transpondermodul verhindert ist. Ein analoger Aufbau ist aus der JP 11-348471 A bekannt.

Sofern das Schließverhalten bei solchen mit einer Abschirmung versehenen buchartigen Dokumenten ungenügend ist, kann dennoch ein elektronisches Auslesen von Daten aus dem Transpondermodul erfolgen, da die das Transpondermodul aufnehmende Buchdeckeneinlage gegenüber der gegenüberliegenden Abschirmung in der zweiten Buchdeckeneinlage absteht und somit eine hinreichende Abschirmung nicht mehr gegeben ist.

Der Erfindung liegt die Aufgabe zugrunde, ein buchartiges Dokument, insbesondere Identifikationsdokument, vorzuschlagen, bei welchem ein unerwünschtes Auslesen von Daten in einem solchen buchartigen Dokument unterbunden ist, insbesondere ein elektrisches Auslesen von einem Transpondermodul und/oder ein visuelles Auslesen von Daten des buchartigen Dokumentes verhindert ist.

Der Erfindung liegt des Weiteren die Aufgabe zugrunde, ein Verfahren zum Sichern von Daten in einem Transpondermodul in einem buchartigen Dokument vorzuschlagen, um ein unerwünschtes Auslesen von Daten bei einem geschlossenen buchartigen Dokument zu unterbinden.

Diese Aufgabe wird durch ein buchartiges Dokument gelöst, bei dem eine Buchdeckenvorderseite und eine Buchdeckenrückseite jeweils zumindest ein Verschlusselement aufweisen, durch welches die Buchdeckenvorderseite und die Buchdeckenrückseite nach dem Gebrauch des buchartigen Dokumentes in einer geschlossenen Anordnung gehalten sind und das buchartige Dokument einen Sensor aufweist, der mit dem Transpondermodul kontaktiert ist und der das Transpondermodul aktiviert und deaktiviert, wobei die Verschlusselemente in der geschlossenen Anordnung der Buchdeckenvorderseite zur Buchdeckenrückseite den Sensor in einen Schaltzustand versetzen, der das Transpondermodul deaktiviert. Dadurch wird ermöglicht, dass bei einem geschlossenen buchartigen Dokument das Transpondermodul in einen inaktiven Zustand übergeführt wird, so dass durch Einbringen eines Wechselfeldes auf das buchartige Dokument, welches üblicherweise zum elektronischen Auslesen der Daten aus dem Transpondermodul erzeugt wird, ein Auslesen nicht mehr möglich ist und das Transpondermodul bei einem solchen Versuch zum elektronischen Auslesen von Daten nicht arbeitet. Durch die Verschlusselemente wird der Sensor geschalten, der wiederum das Transpondermodul deaktiviert. Gleichzeitig ermöglichen die Verschlusselemente, dass die Buchdeckenvorderseite und die Buchdeckenrückseite in einer geschlossenen Anordnung insbesondere aneinanderliegend oder unter Zwischenschaltung von Datenseiten und/oder einer Personalisierdatenseite aneinanderliegend gehalten sind, so dass ein visuelles Auslesen oder optisches Auslesen von Daten bei einem ungenügenden Schließverhalten ebenfalls verhindert ist. Durch die Kombination der Verschlusselemente mit dem Sensor, der das Transpondermodul aktiviert oder deaktiviert, kann somit ein unerwünschtes elektronisches und visuelles Auslesen von Daten aus dem buchartigen Dokument verhindert werden.

Bevorzugt ist vorgesehen, dass beim Aufklappen der Buchdeckenvorderseite zur Buchdeckenrückseite ein Abstand der Verschlusselemente zueinander zunimmt und einen Schaltvorgang des Sensors einleitet, der einen zweiten Schaltzustand einnimmt und das Transpondermodul aktiviert. Somit kann das buchartige Dokument ohne zusätzliche Maßnahme beim Öffnen in einen Gebrauchszustand übergeführt werden, in dem ein elektronisches Auslesen der Daten aus dem Transpondermodul ermöglicht ist.

Vorzugsweise sind die Verschlusselemente in der Buchdeckenvorderseite und in der Buchdeckenrückseite einander paarweise zugeordnet, so dass diese beim Schließen des buchartigen Dokumentes einander gegenüberliegen, zumindest teilweise überlappen und vorzugsweise deckungsgleich zueinander ausgerichtet sind. Gemäß einer ersten bevorzugten Ausführungsform sind die einander paarweise zugeordneten Verschlusselemente als Permanentmagnete ausgebildet. Dabei ist die Ausrichtung des einen zum anderen Verschlusselement der einander paarweise zugeordneten Permanentmagneten um 180° gedreht, so dass ein Anziehungseffekt bewirkt ist. Alternativ kann eines der beiden Verschlusselemente aus einem ferromagnetischen Material, wie beispielsweise Eisen, Nickel, Kobalt oder auch Legierungen, bestehen, die vom Permanentmagneten angezogen werden und das gegenüberliegende Verschlusselement als Permanentmagnet ausgebildet ist. Diese vorgenannten Verschlusselemente weisen den Vorteil auf, dass eine hinreichende Annäherung der Buchdeckenvorderseite zur Buchdeckenrückseite genügt, um ein selbstständiges Schließen der Buchdeckenvorderseite und der Buchdeckenrückseite in eine geschlossene Anordnung zu ermöglichen und aufrechtzuerhalten. Solche ferromagnetischen Verschlusselemente ermöglichen auch in einfacher Weise das Öffnen des buchartigen Dokumentes für das Auslesen der Daten aus dem buchartigen Dokument.

Bevorzugt ist vorgesehen, dass die aus einem Permanentmagnet bestehenden Verschlusselemente als Blättchen oder Streifen ausgebildet sind und insbesondere im Randbereich der Buchdeckenvorderseite und Buchdeckenrückseite einander zugeordnet sind. In Abhängigkeit der aufzubringenden Haltekraft für eine geschlossene Anordnung wird die Größe der Verschlusselemente ausgewählt. Bevorzugt sind diese nahe einer Stirnseite der Buchdeckenvorderseite und Buchdeckenrückseite entfernt zum Falzbereich des Bucheinbandes angeordnet. Diese Verschlusselemente sind bevorzugt derart in den Bucheinband integriert, dass diese von außen nicht fühlbar sind.

Des Weiteren ist das aus einem ferromagnetischen Material bestehende Verschlusselement als Blättchen oder Streifen ausgebildet oder als eine Schicht in der Buchdeckenvorderseite oder Buchdeckenrückenseite ausgebildet, die sich zumindest teilweise, abschnittsweise oder vollständig entlang der Buchdeckenvorderseite oder Rückseite erstreckt. Dadurch kann ein solches Verschlusselement noch weitere Funktionen, wie beispielsweise die Aussteifung des Bucheinbandes oder ein Schutz eines Transpondermoduls, umfassen.

Der im buchartigen Dokument vorgesehene Sensor ist bevorzugt als ein magnetoresistiver Sensor ausgebildet. Als ein magnetoresistiver Sensor wird ein Schaltelement verstanden, welcher beim Vorhandensein eines Magnetfeldes einen ersten Schaltzustand und beim Abschwächen oder Entfernen eines Magnetfeldes einen zweiten Schaltzustand einnimmt. Bei einer geschlossenen Anordnung der Buchdeckenvorderseite und Buchdeckenrückseite des buchartigen Dokumentes wird durch die Verschlusselemente, ein Magnetfeld aufgebaut, welches auf den magnetoresistiven Sensor wirkt und diesen in seinem Schaltzustand beeinflusst, insbesondere geöffnet. Sobald das buchartige Dokument geöffnet wird, wird durch das durch die Verschlusselemente erzeugte Magnetfeld geändert oder aufgehoben und der magnetoresistive Sensor wieder in seinen zweiten Schaltzustand, insbesondere geschlossen, gesetzt. Dadurch kann die Ansteuerung des Transpondermoduls in einen aktiven oder inaktiven Zustand erfolgen.

Bevorzugt ist vorgesehen, dass der magnetoresistive Sensor als Schaltkontakt ausgebildet ist, der einen Schaltkreis des Transpondermoduls unterbricht. Dabei kann der magnetoresistive Sensor beispielsweise in eine Antennenwindung integriert sein und als Öffner und Schließer ausgebildet sein. Ebenso kann dieser magnetoresistive Sensor unmittelbar in dem IC-Chip des Transpondermoduls eingebracht sein, um dort als Öffner oder Schließer zu wirken. Des Weiteren kann alternativ vorgesehen sein, dass der magnetoresistive Sensor als veränderbarer Widerstand ausgebildet ist, der das Transpondermodul in den aktiven oder inaktiven Zustand versetzt.

Nach einer bevorzugten Ausgestaltung der Erfindung ist vorgesehen, dass der magnetoresistive Sensor aus wenigstens zwei Schichten aus einem magnetisierbaren Material besteht, die durch eine Trennlage zueinander getrennt sind. Dadurch kann beispielsweise in einer Schicht durch das von dem Verschlusselement erzeugte Magnetfeld eine Widerstandsänderung erzielt werden und in der benachbarten Schicht nicht. Durch einen Vergleich der beiden Widerstandswerte wird diese Differenz erfasst und ausgewertet. Beispielsweise kann die Schlussfolgerung getroffen werden, dass bei einer Differenz gleich Null das buchartige Dokument geschlossen ist, da auf beide Schichten das Magnetfeld der Verschlusselemente wirkt, wodurch das Transpondermodul inaktiv geschalten wird.

Eine weitere alternative Ausgestaltung eines magnetoresistiven Sensors sieht vor, dass dieser aus zumindest einer Schicht besteht, welche das Transpondermodul umgibt und leitfähige Partikel umfasst. Dadurch kann in Abhängigkeit des Magnetfelds eine Ausrichtung der leitfähigen Partikel geschaffen werden, um dadurch das Transpondermodul in einen aktiven oder nicht aktiven Zustand überzuführen.

Eine weitere alternative Ausgestaltung sieht vor, dass als Sensor ein Reed-Kontakt oder ein Hall-Sensor vorgesehen ist. Auch solche Sensoren können in den Schichtaufbau einer Buchdeckenvorderseite und/oder Buchdeckenrückseite als auch in eine Personalisierdatenseite integriert werden.

Eine bevorzugte Ausführungsform des buchartigen Dokuments sieht vor, dass das Transpondermodul und der Sensor gemeinsam in die Buchdeckenvorderseite, die Buchdeckenrückseite oder in die Personalisierdatenseite eingebracht sind. Dadurch wird die Herstellung des buchartigen Dokumentes vereinfacht.

Bevorzugt kann dem Sensor gegenüberliegend ein Steuerelement zugeordnet sein, welches als Permanentmagnet ausgebildet ist. Beim Überführen der Buchdeckenvorderseite und der Buchdeckenrückseite in eine geschlossene Anordnung wird das Steuerelement unmittelbar benachbart zum Sensor positioniert, insbesondere deckungsgleich positioniert. Dadurch kann bei einem magnetoresistiven Sensor durch das Steuerelement ein kontaktloses Schalten bewirkt werden, so dass der Sensor den Schaltkreis unterbricht und dadurch ein Auslesen des Transpondermoduls im geschlossenen Zustand nicht möglich ist. Ein solches zusätzliches Steuerelement kann auch dann vorgesehen sein, wenn der Sensor durch die Verschlusselemente in einer geschlossenen Anordnung der Buchdeckenvorderseite und der Buchdeckenrückseite bereits geschalten wird, um das Schalten des Sensors sicherzustellen.

Nach einer alternativen Ausgestaltung der Erfindung ist vorgesehen, dass die Verschlusselemente einen mechanisch lösbaren Verschluss bilden und das zumindest eine Verschlusselement mit dem Sensor in Verbindung steht oder der Sensor in zumindest einem Verschlusselement integriert ist. Dies ermöglicht eine einfache und kompakte Ausführungsform, wobei durch das Überführen der Buchdeckenvorderseite und Buchdeckenrückseite in die geschlossene Anordnung automatisch ein Schalten des Sensors angesteuert ist. Unter dem mechanisch lösbaren Verschluss können verschiedene Anordnungen verstanden werden, wie beispielsweise eine verrastende, eine verklipsende, eine klemmende, eine verhakende Anordnung oder dergleichen.

Der Sensor, der zumindest mit einem der beiden Verschlusselemente in Verbindung steht oder in dem Verschlusselement integriert ist, um den mechanisch lösbaren Verschluss zu bilden, ist bevorzugt mit einer elektrischen Leitung mit der Antenne und/oder dem Transpondermodul kontaktiert. Dadurch kann der Schaltzustand an die Antenne und/oder das Transpondermodul weitergegeben werden, um das elektronische Auslesen bei einer geschlossenen Anordnung des buchartigen Dokumentes zu verhindern.

Gemäß einer bevorzugten Ausführungsform des mechanisch lösbaren Verschlusses bilden die Verschlusselemente einen Druckknopfverschluss, die beim Verrasten der beiden Verschlusselemente den Sensor schalten. Dabei können herkömmliche Druckknopfelemente, wie ein männliches und ein weibliches Verrastelement, vorgesehen sein, die bei der geschlossenen Anordnung der Buchdeckenrückseite und Buchdeckenvorderseite ineinander verrasten.

Eine alternative Ausgestaltung der Verschlusselemente zur Bildung eines mechanisch lösbaren Verschlusses sieht vor, dass die Verschlusselemente einen Klettverschluss bilden, wobei die Verschlusselemente jeweils zumindest eine elektrisch leitfähige Kontaktstelle aufweisen und die Verschlusselemente mit einem elektrischen Leitelement miteinander verbunden sind und der Sensor mit dem elektrischen Leitelement kontaktiert ist. Dadurch kann durch ein Schließen der Verschlusselemente ein geschlossener Schaltkreis gebildet werden, wodurch beim Einbringen eines elektromagnetischen Wechselfeldes für den Versuch zum Auslesen der Daten aus dem Transpondermodul der Sensor geschalten wird, so dass dieser in die Antenne oder das Transpondermodul eingreift und das Auslesen verhindert.

Eine weitere bevorzugte Ausführungsform der Erfindung sieht vor, dass der Sensor als elektrischer Leiter ausgebildet ist, der mit dem zumindest einen Verschlusselement in der Buchdeckenvorderseite und der Buchdeckenrückseite verbunden ist und an dem Transpondermodul angeschlossen ist. Dadurch wird beim Öffnen des buchartigen Dokumentes ein Schaltkreis, der mit dem Transpondermodul kontaktiert ist, geöffnet, wodurch das Transpondermodul in ein Invertierungselement in den aktiven Zustand übergeführt wird, in welchem ein elektrisches Auslesen ermöglicht ist.

Die der Erfindung zugrundeliegende Aufgabe wird des Weiteren durch ein Verfahren zum Sichern von Daten in einem Transpondermodul in einem buchartigen Dokument gegen unerwünschtes Auslesen durch Dritte dadurch gelöst, dass beim Überführen einer Buchdeckenvorderseite und einer Buchdeckenrückseite des buchartigen Dokumentes aus einer aufgeklappten Gebrauchsposition in eine geschlossene Anordnung durch jeweils zumindest ein Verschlusselement in der Buchdeckenvorderseite und der Buchdeckenrückseite, die einander zugeordnet sind, ein Sensor aktiviert wird, der mit dem Transpondermodul kontaktiert ist und das Transpondermodul durch den aktivierten Sensor deaktiviert wird, so dass ein unerwünschtes Auslesen von Daten aus dem Transpondermodul unterbunden wird. Dadurch kann das Transpondermodul beim Aufklappen des buchartigen Dokumentes zur Einsichtnahme oder zur Überprüfung von Daten automatisch in einen Betriebsbereitschaftszustand gesetzt werden und beim Schließen des buchartigen Dokumentes in einen Sperrzustand oder Ruhezustand, in welchem das Auslesen von Daten nicht möglich ist.

Bevorzugt ist vorgesehen, dass beim Überführen der Buchdeckenvorderseite und der Buchdeckenrückseite in die geschlossene Anordnung durch die Verschlusselemente in der geschlossenen Anordnung ein Magnetfeld auf den Sensor wirkt und der Sensor aktiviert und das Transpondermodul durch den Sensor deaktiviert wird. Somit bedarf es keiner zusätzlichen Aktivierung des Sensors oder des Transpondermoduls, vielmehr wird durch diese Anordnung beim Schließen des buchartigen Dokumentes automatisch das Transpondermodul deaktiviert und in einen Sicherheitsmodus übergeführt, der das elektronische Auslesen der Daten verhindert.

Nach einer alternativen Ausgestaltung des Verfahrens wird beim Überführen der Buchdeckenvorderseite und der Buchdeckenrückseite in die geschlossene Anordnung des buchartigen Dokumentes durch Verschlusselemente ein Schaltvorgang erzeugt, durch welchen der Sensor aktiviert und das Transpondermodul deaktiviert wird. Beispielsweise kann als Verschlusselement ein Druckknopfverschluss oder ein Klettverschluss vorgesehen sein. Dadurch wird anstelle des Aufbaus eines Magnetfeldes zum Schalten des Sensors durch ein mechanisches Schalten, beispielsweise durch ein Rasten oder ein Verhaken, der Sensor aktiviert.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht auf eine erste Ausführungsform eines buchartigen Dokumentes,
Figur 2 eine schematische Ansicht des buchartigen Dokumentes in einer geschlossenen Anordnung,
Figur 3 eine schematische Ansicht einer ersten alternativen Ausführungsform des buchartigen Dokumentes zu Figur 1,
Figur 4 eine schematische Ansicht einer zweiten alternativen Ausführungsform des buchartigen Dokumentes zu Figur 1,
Figur 5 eine schematische Ansicht einer weiteren alternativen Ausführungsform des buchartigen Dokumentes zu Figur 1 und
Figur 6 eine schematische Ansicht einer weiteren alternativen Ausführungsform des buchartigen Dokumentes zu Figur 5.

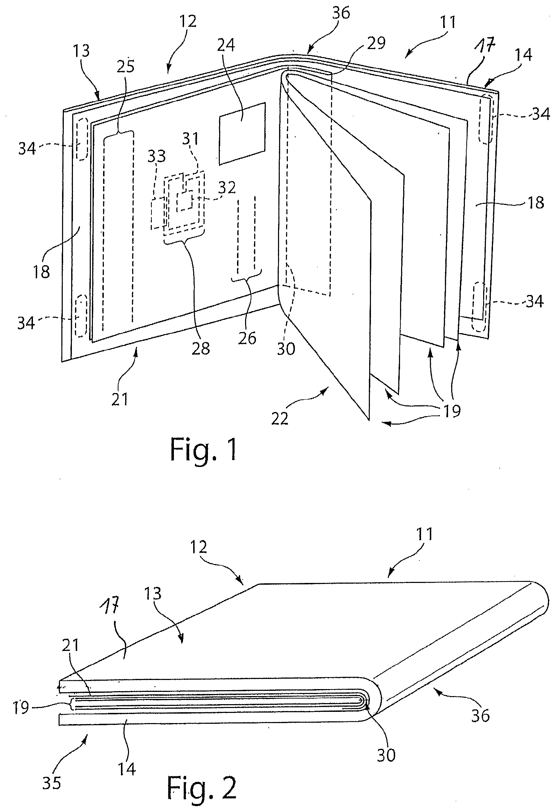

In Figur 1 ist ein buchartiges Dokument 11 dargestellt. Bei diesem buchartigen Dokument 11 handelt es sich beispielsweise um ein Wert- und/oder Sicherheitsdokument, insbesondere um einen Reisepass. Dieses Dokument 11 umfasst einen Bucheinband 12 mit einer Buchdeckenvorderseite 13 und einer Buchdeckenrückseite 14. Diese Buchdeckenvorderseite 13 und die Buchdeckenrückseite 14 umfassen wenigstens eine Buchdeckeneinlage, die an deren Außenseite beispielweise einen Buchdeckeneinband 17 aufweisen können, wobei an der jeweiligen Innenseite der Buchdeckenvorderseite 13 und Buchdeckenrückseite 14 ein Vorsatz 18 aufgebracht sein kann. Bevorzugt sind der Buchdeckeneinband 17 und der Vorsatz 18 durch Verklebung mit der zumindest einen Buchdeckeneinlage verbunden.

Der Bucheinband 12 nimmt mehrere Datenseiten 19 auf. Bevorzugt ist auch eine Personalisierdatenseite 21 vorgesehen. Die Datenseite 19 und/oder die Personalisierdatenseite 21 und der Vorsatz 18 sind vorzugsweise zu einem Buchblock 22 miteinander verbunden und in dem Bucheinband 12 befestigt. Beispielsweise können die Datenseiten 19 und/oder die Personalisierdatenseite 21 und der Vorsatz 18 durch eine Naht zu einem Buchblock miteinander verbunden sein.

Die Personalisierdatenseite 21 ist beispielsweise gemäß ICAO-Standard ausgebildet und umfasst ein Bild 24 des Dokumenteninhabers, eine OCR (Optical Character Recognition)-maschinenlesbare Zeile 25 sowie weitere Personalisierdaten 26.

Die Personalisierdatenseite 21 umfasst gemäß diesem Ausführungsbeispiel des Weiteren ein Transpondermodul 28, in welchem die Daten des Dokumenteninhabers und weitere Sicherheitsmerkmale abgespeichert sein können. Die Personalisierdatenseite 21 ist beispielsweise als Einlegeblatt ausgebildet und kann gemäß dem Ausführungsbeispiel eine Lasche 29 umfassen, die sich über einen Nahtbereich 30 hinaus erstreckt. Alternativ kann anstelle der Lasche 29 eine vollständige Personalisier- oder Datenseite vorgesehen sein.

Die Personalisierdatenseite 21 umfasst wenigstens zwei Kunststoffschichten, die miteinander laminiert sind und einen Folienverbund bilden. Dazwischenliegend ist das Transpondermodul 28 vorgesehen. Vorzugsweise kann zwischen den zumindest zwei äußeren Kunststoffschichten eine weitere Schicht, insbesondere aus Papier, eingebracht sein, welche die Personalisierdaten 26 sowie das Bild 24 und die OCR-maschinenlesbare Zeile 25 umfasst. Bevorzugt sind die äußeren Kunststoffschichten aus Polycarbonat ausgebildet und umhüllen die innenliegende Schicht bevorzugt vollständig.

Die Personalisierdatenseite 21 weist des Weiteren einen Sensor 33 auf, der mit dem Transpondermodul 28 kontaktiert, insbesondere elektrisch kontaktiert ist. Dieser Sensor 33 ist analog wie das Transpondermodul 28 in die Personalisierdatenseite 21 eingebracht und durch die zumindest zwei äußeren Kunststoffschichten des Folienverbundes vollständig umgeben.

Der Sensor 33 wird durch Verschlusselemente 34 aktiviert und deaktiviert, welche in der Buchdeckenvorderseite 13 und Buchdeckenrückseite 14 vorgesehen sind. Jeweils zumindest ein Verschlusselement 34 ist in der Buchdeckenvorderseite 13 und der Buchdeckenrückseite 14 eingebracht und wird an der Buchdeckeneinlage oder zwischen dem Buchdeckeneinband 17 und dem Vorsatz 18 fixiert oder ist an dem Buchdeckeneinband 17, der Buchdeckeneinlage oder dem Vorsatz 18 vorzugsweise durch eine Verklebung befestigt. Beispielsweise kann das Verschlusselement 34 als Blättchen ausgebildet sein, welches beispielsweise eine runde, eine längliche, länglich rechteckige oder länglich ovale Form umfasst. Die Verschlusselemente 34 bestehen gemäß diesem Ausführungsbeispiel aus einem Permanentmagneten. Diese sind einander gegenüberliegend in der Buchdeckenvorderseite 13 und der Buchdeckenrückseite 14 angeordnet, so dass beim Schließen des buchartigen Dokumentes 11 die Verschlusselemente 34 vorzugsweise deckungsgleich einander gegenüberliegen und das buchartige Dokument 11 in einer geschlossenen Anordnung 35 halten (Figur 2). Dabei sind die einander zugeordneten Verschlusselemente 34 in der Buchdeckenvorderseite 13 und Buchdeckenrückseite 14 um 180° zueinander verdreht, damit diese sich gegenseitig anziehen und das buchartige Dokument 11 in der geschlossenen Anordnung 35 halten. Beispielsweise können, wie dies in Figur 1 dargestellt ist, nahe dem jeweiligen Eckbereich der Buchdeckenvorderseite 13 und der Buchdeckenrückseite 14 entfernt zum Falzbereich 36 des Bucheinbandes 12 jeweils Verschlusselemente 34 vorgesehen sein, so dass eine hinreichende Haltekraft zwischen den beiden Verschlusselementen 34 wirkt, um die Buchdeckenvorderseite 13 und die Buchdeckenrückseite 14 in der geschlossenen Anordnung 35 zu halten.

Der Sensor 33 ist bevorzugt benachbart zu einem Paar oder zwischen mehreren Paaren von Verschlusselementen 34 angeordnet, so dass der Sensor 33 innerhalb eines Magnetfeldes der als Permanentmagneten ausgebildeten Verschlusselemente 34 liegt.

Gemäß einer ersten Ausführungsform des magnetoresistiven Sensors 33 ist dieser als Schaltkontakt ausgebildet, der einen Schaltkreis des Transpondermoduls 28 unterbricht oder schließt. Sofern auf den Sensor 33 ein durch die Verschlusselemente 34 erzeugtes Magnetfeld wirkt, unterbricht der Sensor 33 den Schaltkreis des Transpondermoduls 28, so dass dieses deaktiviert ist. Somit ist bei einer geschlossenen Anordnung 35 des buchartigen Dokumentes 11 ein Auslesen von Daten aus dem Transpondermodul 28 nicht mehr möglich. Beispielsweise kann der Sensor 33 als Schalter ausgebildet sein, der in die Antenne 31 des Transpondermoduls 28 integriert ist und eine Antennenwindung unterbricht oder schließt.

Der Sensor 33 kann auch direkt einen Schaltkreis im IC-Chip 32 des Transpondermoduls 28 ansteuern, also öffnen und schließen. Der Sensor 33 kann auch in dem Transpondermodul 28 integriert sein.

Des Weiteren kann vorgesehen sein, dass der Sensor 33 als Widerstand ausgebildet ist, der beim Vorhandensein des durch die Verschlusselemente 34 erzeugten Magnetfeldes seinen Widerstand ändert und das Transpondermodul 28 ansteuert.

In Figur 2 ist eine schematische Ansicht des buchartigen Dokumentes 11 gemäß Figur 1 in einer geschlossenen Anordnung 35 dargestellt. Die Verschlusselemente 34 sind dabei derart bezüglich deren aufeinander wirkenden Magnethaltekraft abgestimmt, dass ein unerwünschtes Aufklappen unterbunden ist und die geschlossene Anordnung 35 selbstständig aufrechterhalten bleibt und dennoch ein manuelles Öffnen des buchartigen Dokumentes 11 für jedermann möglich ist. Durch die geschlossene Anordnung 35 ist ein visuelles Auslesen der Daten insbesondere auf der Personalisierdatenseite 21 unterbunden. Beim Öffnen der Buchdeckenvorderseite 13 gegenüber der Buchdeckenrückseite 14 wird das durch die Verschlusselemente 34 erzeugte Magnetfeld reduziert oder aufgehoben, wodurch der Sensor 33 in seinen zweiten Schaltzustand übergeführt wird und demzufolge das Transpondermodul 28 angesteuert und in einen aktiven Zustand gesetzt wird. Dieser aktive Zustand des Transpondermoduls 28 ermöglicht das elektronischen Auslesen der darin gespeicherten Daten, beispielsweise für eine Passkontrolle.

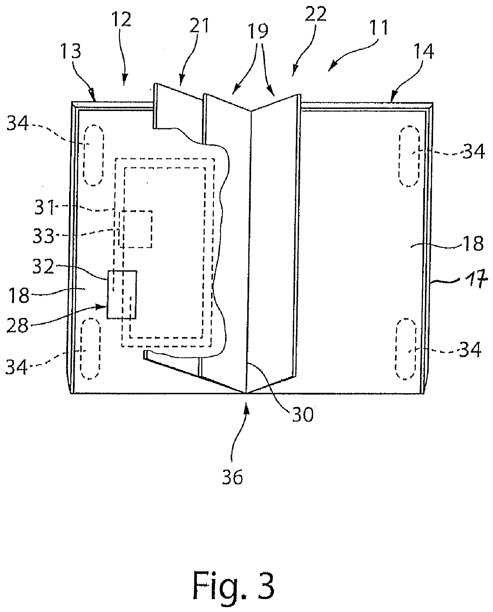

In Figur 3 ist eine alternative Ausführungsform des buchartigen Dokumentes 11 zu Figur 1 dargestellt. Diese Ausführungsform weicht dahingehend ab, dass das Transpondermodul 28 und der Sensor 33 in der Buchdeckenvorderseite 13 angeordnet sind. Alternativ können der Sensor 33 und das Transpondermodul 28 auch in der Buchdeckenrückseite 14 vorgesehen sein.

Bei beiden Ausführungsformen wird durch die als Permanentmagnet ausgebildeten Verschlusselemente 34 ermöglicht, dass das buchartige Dokument 11 selbstständig in einer Nichtgebrauchsposition oder in einer geschlossenen Anordnung 35 gehalten wird, wobei gleichzeitig in der geschlossenen Anordnung 35 der Buchdeckenvorderseite 13 zur Buchdeckenrückseite 14 der Sensor 33 durch das Magnetfeld der Permanentmagnete aktiviert ist, der das Transpondermodul 28 deaktiviert.

Somit kann weder ein visuelles Auslesen der Daten noch ein elektronisches Auslesen von Daten aus dem Transpondermodul 28 erfolgen.

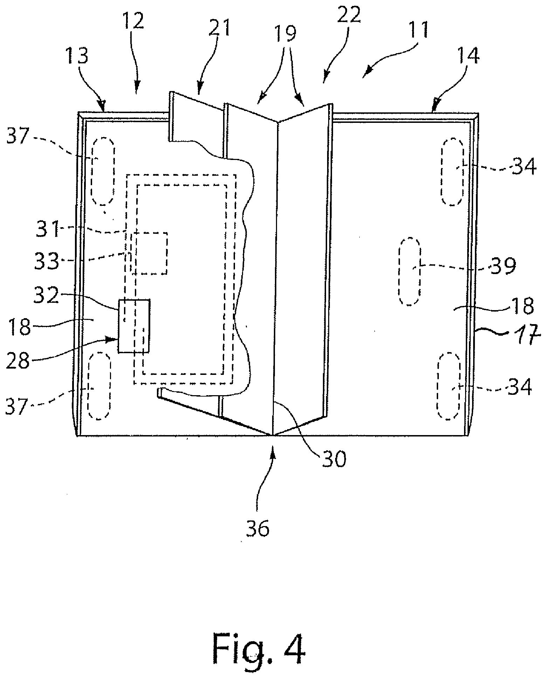

In Figur 4 ist eine weitere alternative Ausführungsform zu Figur 3 dargestellt. Bei dieser Ausführungsform sind die Verschlusselemente 34 als Permanentmagnet ausgebildet, und die Verschlusselemente 37 bestehen aus einem ferromagnetischen Material, wie beispielsweise Eisen, Nickel, Kobalt oder verschiedene Legierungen, die von Permanentmagneten angezogen werden können. Dabei sind die Verschlusselemente 37 benachbart zum Sensor 33 angeordnet. Gemäß dem Ausführungsbeispiel in Figur 4 ist der Sensor 33 in der Buchdeckenvorderseite 13 vorgesehen, so dass demnach auch das Verschlusselement 37 in der Buchdeckenvorderseite 13 vorgesehen ist. In der Buchdeckenrückseite 14, welche gegenüber dem Sensor 33 aufgeklappt und von diesem entfernt wird, sind die als Permanentmagnet ausgebildeten Verschlusselemente 34 vorgesehen.

Bei einer solchen Ausführungsform wird ermöglicht, dass nach dem Öffnen des buchartigen Dokuments 11 durch Vergrößern des Abstandes zwischen dem Sensor 33 und dem als Permanentmagnet ausgebildeten Verschlusselement 34 der Sensor 33 aufgrund der Abschwächung des Magnetfeldes oder der Position außerhalb des Magnetfeldes geschalten, insbesondere geschlossen, wird, so dass darauffolgend ein elektronisches Auslesen des buchartigen Dokumentes 11 ermöglicht ist.

Ein Auslesen der Daten des buchartigen Dokumentes erfolgt bei den vorbeschriebenen Ausführungsformen derart, dass zunächst mit einer Optik die OCR-Zeile 25 und/oder weitere Daten optisch ausgelesen werden und darauffolgend ein elektronisches Auslesen von Daten aus dem Transpondermodul 28 erfolgt.

Die vorbeschriebene Anordnung der Verschlusselemente 37 und 34 ist auch dann vorgesehen, sofern das Transpondermodul 28 und/oder der Sensor 33 in der Personalisierdatenseite 21 eingebracht sind, wie dies beim Ausführungsbeispiel gemäß Figur 1 der Fall ist.

Des Weiteren kann bevorzugt in einer Buchdeckenrückseite 14, sofern der Sensor 33 in der Buchdeckenvorderseite 13 angeordnet ist, zusätzlich ein Steuerelement 39 vorgesehen sein. Die Positionierung dieses Steuerelementes 39 ist unmittelbar gegenüberliegend zum Sensor 33 bei einer geschlossenen Anordnung 35 des buchartigen Dokumentes 11 vorgesehen. Das zusätzliche Steuerelement 39 ist ebenfalls als Permanentmagnet ausgebildet und kann das auf den Sensor 33 wirkende Magnetfeld verstärken.

Sofern der Sensor 33 in der Personalisierdatenseite 21 vorgesehen ist, kann das Steuerelement 39 in der Buchdeckenvorderseite 13 und/oder der Buchdeckenrückseite 14 vorgesehen sein.

Es versteht sich, dass die in Figur 4 beschriebene Anordnung der Verschlusselemente 34, 37 als auch der Sensor 33 vertauscht angeordnet sein können, so dass die als Permanentmagnet ausgebildeten Verschlusselemente 34 in der Buchdeckenvorderseite 13 und der Sensor 33 und die Verschlusselemente 37 in der Buchdeckenrückseite 14 vorgesehen sind oder anstelle der Anordnung des Sensors 33 in der Buchdeckenrückseite 14 in der Personalisierdatenseite 21 angeordnet ist.

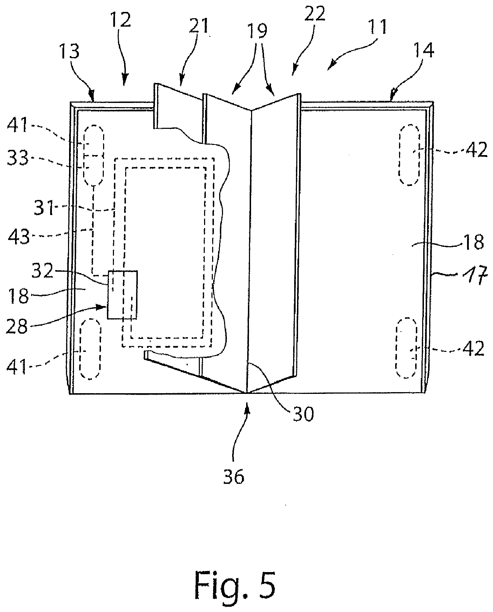

In Figur 5 ist eine schematische Ansicht einer weiteren alternativen Ausführungsform zu einer der Ausführungsformen gemäß den Figuren 1 bis 4 dargestellt. Bei dieser Ausführungsform des buchartigen Dokumentes 11 gemäß Figur 5 sind Verschlusselemente 41, 42 vorgesehen, welche einen mechanisch lösbaren Verschluss bilden. Ein solcher mechanisch lösbarer Verschluss kann durch Verschlusselemente 41, 42 gebildet sein, die miteinander verrasten, verklemmen, verkeilen, verklipsen, verkrallen oder verhaken. Im Ausführungsbeispiel gemäß Figur 5 sind die Verschlusselemente 41, 42 als ein Druckknopfverschluss ausgebildet, wobei an einer Buchdeckenvorderseite 13 beispielsweise ein weibliches Verschlusselement 41 und an der Buchdeckenrückseite 14 ein männliches Verschlusselement 42 vorgesehen sein kann. Es versteht sich, dass die Anordnung auch vertauscht sein kann. Damit diese mechanischen Verschlusselemente 41, 42 ineinandergreifen können, sind die Datenseiten 19 und/oder die Personalisierdatenseite 21 schmäler ausgebildet, so dass das in Figur 5 dargestellte buchartige Dokument 11 in eine geschlossene Anordnung 35 übergeführt werden kann. Anstelle der Zuordnung der Verschlusselemente 41, 42 am Rand der Längsseiten der Buchdeckenvorderseite 13 und Buchdeckenrückseite 14 können die Verschlusselemente 41, 42 auch am oberen und unteren Rand entlang der Schmalseite der Buchdeckenvorderseite 13 und Buchdeckenrückseite 14 vorgesehen sein. Des Weiteren können die Datenseiten 19 und/oder Personalisierdatenseiten 21 alternativ eine entsprechende Aussparung aufweisen, damit die Verschlusselemente 41, 42 ineinandergreifen können.

Zumindest eines der beiden Verschlusselemente 41, 42 steht mit dem Sensor 33 in Verbindung, der über einen elektrischen Leiter 43 mit dem Transpondermodul 28 oder mit einem Zu- und Abgang mit der Antenne 31 in Verbindung stehen kann, um das Transpondermodul 28 in den entsprechenden Schaltzustand überzuführen. Der Sensor 33 kann beispielsweise in einem der beiden Verschlusselemente 41, 42 integriert sein. In diesem Fall ist insbesondere der Sensor 33 als mechanischer Schalter ausgebildet, das heißt, beim Schließen der Verschlusselemente 41, 42 wird der Schalter, das heißt der Sensor 33, geöffnet, wodurch ein elektronisches Auslesen der Daten aus dem Transpondermodul 28 verhindert ist.

Bei einem solchen Sensor 33, der als mechanischer Schalter ausgebildet ist, kann ein zusätzliches Steuerelement 39, wie dies beispielsweise in Figur 4 dargestellt ist, entfallen.

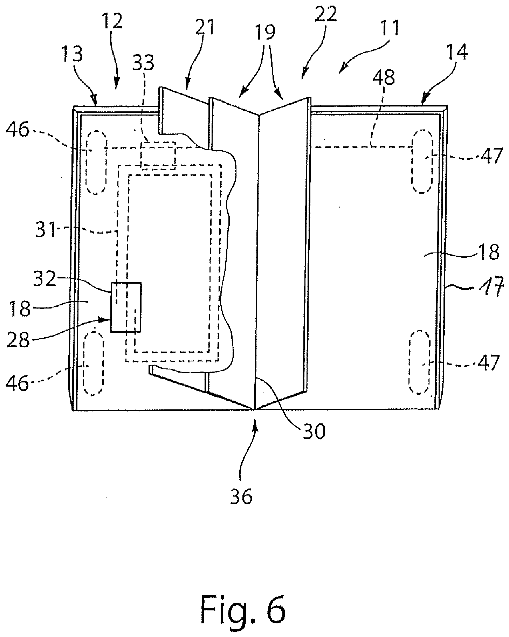

In Figur 6 ist eine alternative Ausführungsform zu Figur 5 dargestellt. Bei dieser Ausführungsform bilden die Verschlusselemente 46, 47 einen Klettverschluss, das heißt, dass das Verschlusselement 46 beispielsweise das Klettband und das Verschlusselement 47 beispielsweise das Flauschband sein kann. Diese können mit einer elektrischen Kontaktstelle versehen oder mit einer elektrisch leitenden Schicht überzogen sein, so dass beim Schließen der beiden Verschlusselemente 46, 47 eine elektrische Kontaktierung erfolgt. Die beiden Verschlusselemente 46, 47 sind beispielsweise durch eine elektrische Verbindung 48 miteinander verbunden. Gleichzeitig ist ein Sensor 33 mit der elektrischen Verbindung 48 kontaktiert. Dieser Sensor 33 kann auch mit der Antenne 31 oder über eine separate Leitung mit dem Transpondermodul 28 in Verbindung stehen.

Beim Überführen des buchartigen Dokumentes 11 gemäß Figur 6 in eine geschlossene Anordnung kann durch das Verschlusselement 46 und 47 ein geschlossener Schaltkreis über die elektrische Verbindung 48 geschaffen werden, durch welche eine Ansteuerung des Sensors 33 möglich ist, sobald dieser beim Einbringen des buchartigen Dokumentes 11 in ein elektromagnetisches Wechselfeld über die Antenne 31 mit Energie versorgt wird. Dadurch kann ein Schalten bewirkt werden.

Der oder die elektrischen Leiter 43 und/oder elektrische Verbindung 48 können in Analogie zur Antenne 31 hergestellt sein, insbesondere in der Form, dass eine entsprechende Leiterbahn des leitfähigen Materials aufgedruckt ist.

### Bezugszahlenliste

11. Buchartiges Dokument
12. Bucheinband
13. Buchdeckenvorderseite
14. Buchdeckenrückseite
17. Buchdeckeneinband
18. Vorsatz
19. Datenseite
21. Personalisierdatenseite
22. Buchblock
24. Bild
25. Zeile
26. Personalisierdaten
28. Transpondermodul
29. Lasche
30. Nahtbereich
31. Antenne
32. IC-Chip
33. Sensor
34. Verschlusselement
35. Geschlossene Anordnung
36. Falzbereich
37. Verschlusselement
39. Steuerelement
41. Verschlusselement
42. Verschlusselement
43. Elektrischer Leiter
46. Verschlusselement
47. Verschlusselement
48. Elektrische Verbindung

## Patentansprüche

1. Buchartiges Dokument, insbesondere Identifikationsdokument, mit einem Bucheinband (12), welcher eine Buchdeckenvorderseite (13) und eine Buchdeckenrückseite (14) umfasst, mit einer oder mehreren Datenseiten (19) und/oder mit einer Personalisierdatenseite (21) und mit einem in dem Bucheinband (12) oder der Personalisierdatenseite (21) angeordneten Transpondermodul (28), welches eine Antenne (31) und einen IC-Chip (32) umfasst und ein Sensor (33) vorgesehen ist, der mit dem Transpondermodul (28) kontaktiert ist und das Transpondermodul (28) aktiviert und deaktiviert, **dadurch gekennzeichnet,**
- **dass** die Buchdeckenvorderseite (13) und Buchdeckenrückseite (14) jeweils zumindest ein Verschlusselement (34, 37) aufweisen, durch welche die Buchdeckenvorderseite (13) und Buchdeckenrückseite (14) nach dem Gebrauch des buchartigen Dokumentes (11) in einer geschlossenen Anordnung (35) gehalten sind, und
- **dass** die Verschlusselemente (34, 37) in der geschlossenen Anordnung der Buchdeckenvorderseite (13) und der Buchdeckenrückseite (14) den Sensor (33) in einen Schaltzustand setzen, der das Transpondermodul (28) deaktiviert.

2. Buchartiges Dokument nach Anspruch 1, **dadurch gekennzeichnet, dass** beim Aufklappen der Buchdeckenvorderseite (13) zur Buchdeckenrückseite (14) ein Abstand der Verschlusselemente (34, 37) zueinander zunimmt und einen Schaltvorgang des Sensors (33) einleitet, der einen zweiten Schaltzustand einnimmt und das Transpondermodul (28) aktiviert.

3. Buchartiges Dokument nach Anspruch 1, **dadurch gekennzeichnet, dass** die in der Buchdeckenvorderseite (13) und der Buchdeckenrückseite (14) paarweise einander zugeordneten Verschlusselemente (34) als Permanentmagnete ausgebildet sind oder eines der beiden Verschlusselemente (34) als Permanentmagnet und das andere Verschlusselement (37) aus einem aus einem ferromagnetischen Material ausgebildet ist.

4. Buchartiges Dokument nach Anspruch 3, **dadurch gekennzeichnet, dass** das als Permanentmagnet ausgebildete Verschlusselement (34) als Blättchen oder Streifen ausgebildet und im Randbereich der Buchdeckenvorderseite (13) und Buchdeckenrückseite (14) einander zugeordnet, insbesondere nahe einer Stirnseite der Buchdeckenvorderseite (13) und Buchdeckenrückseite (14), die entfernt zum Falzbereich (36) des Bucheinbandes (12) ist, vorgesehen sind, oder dass das aus ferromagnetischem Material bestehende Verschlusselement (37) als Blättchen oder als Streifen oder als eine Schicht ausgebildet ist, die sich zumindest teilweise, abschnittsweise oder vollständig entlang der Buchdeckenvorderseite (13) oder Buchdeckenrückseite (14) erstreckt.

5. Buchartiges Dokument nach Anspruch 1, **dadurch gekennzeichnet, dass** der Sensor (33) als magnetoresistiver Sensor ausgebildet ist.

6. Buchartiges Dokument nach Anspruch 5, **dadurch gekennzeichnet, dass** der magnetoresistive Sensor (33) als Schaltkontakt ausgebildet ist, der einen Schaltkreis des Transpondermoduls (28) unterbricht oder schließt oder dass der magnetoresistive Sensor (33) als Widerstand ausgebildet ist, der das Transpondermodul (28) in einen aktiven oder inaktiven Zustand versetzt, oder dass der magnetoresistive Sensor (33) aus wenigstens zwei Schichten aus einem magnetisierbaren Material besteht, die durch eine Trennlage zueinander getrennt sind, oder dass der magnetoresistive Sensor (33) aus zumindest einer Schicht besteht, welche das Transpondermodul (28) umgibt und leitfähige Partikel umfasst.

7. Buchartiges Dokument nach Anspruch 1, **dadurch gekennzeichnet, dass** der Sensor (33) als Reed-Kontakt oder als Hall-Sensor ausgebildet ist.

8. Buchartiges Dokument nach Anspruch 1, **dadurch gekennzeichnet, dass** das Transpondermodul (28) und der Sensor (33) gemeinsam in dem Bucheinband (12) oder der Personalisierdatenseite (21) vorgesehen sind.

9. Buchartiges Dokument nach einem der vorhergehenden Ansprüche, **dadurch gekennzeichnet, dass** in einer geschlossenen Anordnung (35) der Buchdeckenvorderseite (13) und der Buchdeckenrückseite (14) dem Sensor (33) gegenüberliegend ein Steuerelement (39) zugeordnet ist, welches als Permanentmagnet ausgebildet ist.

10. Buchartiges Dokument nach Anspruch 1, **dadurch gekennzeichnet, dass** die Verschlusselemente (41, 42; 46, 47) einen mechanisch lösbaren Verschluss bilden, die mit dem Sensor (33) in Verbindung stehen oder in einem der Verschlusselemente (41, 42; 46, 47) der Sensor (33) integriert und ein Schalten des Sensors (33) beim Schließen der Verschlusselemente (41, 42; 46, 47) vorgesehen ist.

11. Buchartiges Dokument nach Anspruch 10, **dadurch gekennzeichnet, dass** der Sensor (33) mit einer elektrischen Leitung (43, 48) mit der Antenne (31) und/oder dem Transpondermodul (28) kontaktiert ist.

12. Buchartiges Dokument nach Anspruch 10, **dadurch gekennzeichnet, dass** die Verschlusselemente (41, 42) einen Druckknopfverschluss bilden, die beim Verrasten den Sensor (33) schalten, oder dass die Verschlusselemente (46, 47) einen Klettverschluss bilden, welche zumindest eine elektrisch leitfähige Kontaktstelle aufweisen und dass die den Klettverschluss bildenden Verschlusselemente (46, 47) mit einer elektrischen Verbindung miteinander verbunden sind und der Sensor (33) mit der elektrischen Verbindung (48) kontaktiert ist.

13. Buchartiges Dokument nach Anspruch 1, **dadurch gekennzeichnet, dass** der Sensor (33) als ein elektrischer Schalter ausgebildet ist, der mit dem zumindest einen Verschlusselement (34; 46, 47) der Buchdeckenvorderseite (13) und der Buchdeckenrückseite (14) verbunden ist und an das Transpondermodul (28) angeschlossen ist.

14. Verfahren zum Sichern von Daten in einem Transpondermodul (28) in einem buchartigen Dokument (11), insbesondere nach einem der Ansprüche 1 bis 13, gegen unerwünschtes Auslesen durch Dritte, **dadurch gekennzeichnet, dass** beim Überführen einer Buchdeckenvorderseite (13) und einer Buchdeckenrückseite (14) des buchartigen Dokumentes (11) aus einer aufgeklappten Gebrauchsposition in eine geschlossene Anordnung (35) durch jeweils zumindest ein Verschlusselement (34) in der Buchdeckenvorderseite (13) und der Buchdeckenrückseite (14), die einander zugeordnet sind, ein Sensor (33) aktiviert wird, der mit dem Transpondermodul (28) kontaktiert ist, und dass das Transpondermodul (28) durch den aktivierten Sensor (33) deaktiviert und ein unerwünschtes Auslesen der Daten aus dem Transpondermodul (28) unterbunden wird.

15. Verfahren nach Anspruch 14, **dadurch gekennzeichnet, dass** beim Überführen der Buchdeckenvorderseite (13) und der Buchdeckenrückseite (14) in die geschlossene Anordnung (35) des buchartigen Dokumentes (11) durch die Verschlusselemente (34) ein Magnetfeld auf den Sensor (33) wirkt und der Sensor (33) aktiviert und das Transpondermodul (28) deaktiviert wird, oder dass beim Überführen der Buchdeckenvorderseite (13) und der Buchdeckenrückseite (14) in die geschlossene Anordnung (35) des buchartigen Dokumentes (11) durch die Verschlusselemente (41, 42; 46, 47) ein Schaltvorgang erzeugt wird, durch welchen der Sensor (33) aktiviert und das Transpondermodul (28) deaktiviert wird.

## Claims

1. A book-like document, in particular an identification document, having a binding (12), which comprises a book case front cover page (13) and a book case back cover page (14), having one or a plurality of data pages (19) and/or a personalisation data page (21) and a transponder module (28) incorporated in the binding (12) or in the personalisation data page (21) and comprising an antenna (31) and an IC chip (32), a sensor (33) being provided which is in contact with said transponder module (28) and activates and deactivates the transponder module (28), **characterised in that**,
- the book case front cover page (13) and the book case back cover page (14) have each at least one closure element (34, 37) by means of which said book case front cover page (13) and said book case back cover page (14) are held in a closed disposition (35) after the book-like document (11) has been used, and
- the closure elements (34, 37) will cause the sensor (33) to assume a switching state which deactivates the transponder module (28) when the book case front cover page (13) and the book case back cover page (14) are in their closed disposition.

2. The book-like document as claimed in claim 1, **characterised in that** when the book case front cover page (13) and the book case back cover page (14) are opened, a distance of the closure elements (34, 37) from each other increases and initiates a switching operation of the sensor (33) which will assume a second switching state and activate the transponder module (28).

3. The book-like document as claimed in claim 1, **characterised in that** the closure elements (34) mutually associated in pairs in the book case front cover page (13) and in the book case back cover page (14) are realised in the form of permanent magnets or **in that** between each of said pairs one closure element (34) is realised as a permanent magnet while the other closure element (37) is made of a ferromagnetic material.

4. The book-like document as claimed in claim 3, **characterised in that** the closure elements (34) realised as a permanent magnet are configured as a leaflet or strip and are provided in the edge regions of the book case front cover page (13) and of the book case back cover page (14) in a manner so as to be associated with each other, in particular close to an end face of the book case front cover page (13) and the book case back cover page (14) located away from the fold region (36) of the binding (12), or **in that** the closure elements (37) consisting of a ferromagnetic material are configured as a leaflet or a strip or a layer extending at least partly, section-wise or entirely along the book case front cover page (13) or the book case back cover page (14) .

5. The book-like document as claimed in claim 1, **characterised in that** the sensor (33) is realised as a magnetoresistive sensor.

6. The book-like document as claimed in claim 5, **characterised in that** the magnetoresistive sensor (33) is realised as a switching contact which interrupts or closes a circuit of the transponder module (28) or **in that** the magnetoresistive sensor (33) is realised as a resistor which sets the transponder module (28) to an active or an inactive state or **in that** the magnetoresistive sensor (33) consists of at least two layers of a magnetisable material which are separated from each other by means of a separation layer or **in that** the magnetoresistive sensor (33) consists of at least one layer which surrounds the transponder module (28) and contains conductive particles.

7. The book-like document as claimed in claim 1, **characterised in that** the sensor (33) is realised as a reed contact sensor or a Hall effect sensor.

8. The book-like document as claimed in claim 1, **characterised in that** the transponder module (28) and the sensor (33) are both provided in the binding (12) or in the personalisation data page (21).

9. The book-like document as claimed in any of the preceding claims, **characterised in that** when the book case front cover page (13) and the book case back cover page (14) are in a closed disposition (35) the sensor (33) has a control element (39) associated therewith which is arranged opposite thereto and is realised as a permanent magnet.

10. The book-like document as claimed in claim 1, **characterised in that** the closure elements (41, 42; 46, 47) form a mechanically releasable closure and are connected with the sensor (33) or **in that** said sensor (33) is incorporated in one of the closure elements (41, 42; 46, 47), with prov7ision being made for the sensor (33) to switch when the closure elements (41, 42; 46, 47) are being closed.

11. The book-like document as claimed in claim 10, **characterised in that** contact is made between the sensor (33) and the antenna (31) and/or the transponder module (28) by means of an electric cable (43, 48).

12. The book-like document as claimed in claim 10, **characterised in that** the closure elements (41, 42) form a snap fastener the snapping engagement of which causes the sensor (33) to perform a switching operation or **in that** the closure elements (46, 47) form a hook-and-loop fastener and have at least one electro-conductive contact point, with the closure elements (46, 47) forming said hook-and-loop fastener being interconnected via an electric connection and the sensor (33) being in contact with said electric connection (48).

13. The book-like document as claimed in claim 1, **characterised in that** the sensor (33) is realised as an electrical switch which is connected to the at least one closure element (34; 46, 47) of the book case front cover page (13) and the book case back cover page (14) and is electrically connected to the transponder module (28).

14. A method for securing data contained in a transponder module (28) incorporated in a book-like document (11), in particular as claimed in any one of claims 1 to 13, so as to provide protection against undesirable readout by third parties, **characterised in that** when a book case front cover page (13) and a book case back cover page (14) of the book-like document (11) are converted from an opened use position to a closed disposition (35), closure elements (34), at least one of which is provided in the book case front cover page (13) and in the book case back cover page (14), respectively, and which are associated with each other, will activate a sensor (33) that is in contact with the transponder module (28), and **in that** said transponder module (28) will be deactivated by the activated sensor (33), thus precluding any undesirable readout of data from said transponder module (28).

15. The method as claimed in claim 14, **characterised in that** when the book case front cover page (13) and the book case back cover page (14) are converted to the closed disposition (35) of the book-like document (11), a magnetic field caused by the closure elements (34) is exerted on the sensor (33) thereby activating the sensor (33) and deactivating the transponder module (28), or **in that** when the book case front cover page (13) and the book case back cover page (14) are converted to the closed disposition (35) of the book-like document (11), a switching operation is generated by the closure elements (41, 42; 46, 47) by means of which the sensor (33) is activated and the transponder module (28) is deactivated.

## Revendications

1. Document de type livret, en particulier document d'identification, pourvu d'une reliure (12) qui comprend une page avant de couverture de livret (13) et d'une page arrière de couverture de livret (14), pourvu d'une ou de plusieurs pages de données (19) et/ou d'une page de données de personnalisation (21) et d'un module transpondeur (28) disposé dans la reliure (12) ou dans la page de données de personnalisation (21) et comprenant une antenne (31) et une puce IC (32), et un capteur (33) étant prévu, lequel est mis en contact avec le module transpondeur (28) et active et désactive ledit module transpondeur (28), **caractérisé en ce que**
- la page avant de couverture de livret (13) et la page arrière de couverture de livret (14) présentent respectivement au moins un élément de fermeture (34, 37) grâce auxquels la page avant de de couverture de livret (13) et la page arrière de couverture de livret (14) sont maintenues, après l'utilisation du document (11) de type livret, dans une disposition fermée (35), et
- lorsque la page avant de couverture de livret (13) et la page arrière de couverture de livret (14) se trouvent dans la disposition fermée, les éléments de fermeture (34, 37) mettent le capteur (33) dans un état de commutation qui désactive le module transpondeur (28).

2. Document de type livret selon la revendication 1, **caractérisé en ce que**, lorsque l'on ouvre la page avant de couverture de livret (13) par rapport la page arrière de couverture de livret (14), un espace entre les éléments de fermeture (34, 37) augmente, ce qui initie un processus de commutation du capteur (33) qui prend alors un deuxième état de commutation et active le module transpondeur (28).

3. Document de type livret selon la revendication 1, **caractérisé en ce que** les éléments de fermeture (34) disposés respectivement dans la page avant de couverture de livret (13) et dans la page arrière de couverture de livret (14) de manière à être associés par paire l'un à l'autre sont réalisés en tant qu'aimants permanents, ou **en ce que** l'un des deux éléments de fermeture (34) est réalisé en tant qu'aimant permanent et que l'autre élément de fermeture (37) est réalisé sous la forme d'un matériau ferromagnétique.

4. Document de type livret selon la revendication 3, **caractérisé en ce que** les éléments de fermeture (34) réalisés en tant qu'aimant permanent sont prévus en forme de plaquette ou de bande et disposés respectivement dans la zone périphérique de la page avant de couverture de livret (13) et de la page arrière de couverture de livret (14) de manière à être associés l'un à l'autre, et ce en particulier à proximité d'une face avant de la page avant de couverture de livret (13) et de la page arrière de couverture de livret (14) qui se trouve éloignée de la zone de pliage (36) de la reliure (12), ou **en ce que** l'élément de fermeture (37) constitué en un matériau ferromagnétique est réalisé en tant que plaquette ou en tant que bande ou bien sous la forme d'une couche qui s'étend au moins partiellement, par sections ou entièrement le long de la page avant de couverture de livret (13) ou de la page arrière de couverture de livret (14).

5. Document de type livret selon la revendication 1, **caractérisé en ce que** le capteur (33) est réalisé en tant que capteur magnétorésistif.

6. Document de type livret selon la revendication 5, **caractérisé en ce que** le capteur magnétorésistif (33) est réalisé en tant que contact de commutation qui interrompt ou ferme un circuit de commutation du module transpondeur (28), ou **en ce que** le capteur magnétorésistif (33) est réalisé en tant que résistance qui met le module transpondeur (28) dans un état actif ou inactif, ou **en ce que** le capteur magnétorésistif (33) est composé d'au moins deux couches réalisées en un matériau aimantable lesquelles sont séparées par une couche de séparation, ou **en ce que** le capteur magnétorésistif (33) est composé d'au moins une couche qui entoure le module transpondeur (28) et comprend des particules électroconductrices.

7. Document de type livret selon la revendication 1, **caractérisé en ce que** le capteur (33) est réalisé en tant que contact à lames souples ou en tant que capteur de Hall.

8. Document de type livret selon la revendication 1, **caractérisé en ce que** le module transpondeur (28) et le capteur (33) sont prévus tous les deux dans la reliure (12) ou dans la page de données de personnalisation (21).

9. Document de type livret selon l'une quelconque des revendications précédentes, **caractérisé en ce que**, lorsque la page avant de couverture de livret (13) et la page arrière de couverture de livret (14) sont dans une disposition fermée (35), un élément de commande (39) réalisé en tant qu'aimant permanent est affecté au capteur (33) en étant situé à l'opposé de celui-ci.

10. Document de type livret selon la revendication 1, **caractérisé en ce que** les éléments de fermeture (41, 42; 46, 47) forment une fermeture pouvant être libérée mécaniquement et sont reliés au capteur (33), ou **en ce que** le capteur (33) est intégré dans l'un desdits éléments de fermeture (41, 42; 46, 47) et qu'il est prévu qu'une commutation du capteur (33) s'effectue lors de la fermeture des éléments de fermeture (41, 42; 46, 47).

11. Document de type livret selon la revendication 10, **caractérisé en ce que** le capteur (33) est mis en contact avec l'antenne (31) et/ou le module transpondeur (28) grâce à un fil électrique (43, 48).

12. Document de type livret selon la revendication 10, **caractérisé en ce que** les éléments de fermeture (41, 42) forment une fermeture à bouton-poussoir et commutent le capteur (33) en s'engageant l'un dans l'autre, ou **en ce que** les éléments de fermeture (46, 47) forment une fermeture autoagrippante et présentent au moins un point de contact électroconducteur et que les éléments de fermeture (46, 47) formant la fermeture autoagrippante sont reliés l'un à l'autre par une liaison électrique et que le capteur (33) est mis en contact grâce à la liaison électrique (48).

13. Document de type livret selon la revendication 1, **caractérisé en ce que** le capteur (33) est réalisé sous la forme d'un commutateur électrique qui est relié audit au moins un élément de fermeture (34; 46, 47) de la page avant de couvercle de livret (13) et de la page arrière de couvercle de livret (14) et qui est raccordé au module transpondeur (28).

14. Procédé destiné à sécuriser des données contenues dans un module transpondeur (28) se trouvant dans un document (11) de type livret, en particulier selon l'une quelconque des revendications 1 à 13, en vue d'empêcher une lecture non désirée desdites données par un tiers, **caractérisé en ce que** lorsque l'on fait passer une page avant de couverture de livret (13) et une page arrière de couverture de livret (14) du document (11) de type livret d'une position d'utilisation à une disposition fermée (35), un capteur (33) qui est en contact avec le module transpondeur (28) est activé par au moins un élément de fermeture (34) situé respectivement dans la page avant de couverture de livret (13) et dans la page arrière de couverture de livret (14), lesquels sont associés l'un à l'autre, et **en ce que** le module transpondeur (28) est désactivé par le capteur (33) activé, ce qui permet d'empêcher une lecture non désirée des données du module transpondeur (28).

15. Procédé selon la revendication 14, **caractérisé en ce que** lorsque l'on fait passer la page avant de couverture de livret (13) et la page arrière de couverture de livret (14) dans la disposition fermée (35) du document (11) de type livret, un champ magnétique agit sur le capteur (33) par l'intermédiaire des éléments de fermeture (34), ce qui active ledit capteur (33) et désactive le module transpondeur (28), ou **en ce que** lorsque l'on fait passer la page avant de couverture de livret (13) et la page arrière de couverture de livret (14) dans la disposition fermée (35) du document (11) de type livret, un processus de commutation est initié par les éléments de fermeture (41, 42; 46, 47), ce qui active le capteur (33) et désactive le module transpondeur (28).
